# EUROPEAN PATENT SPECIFICATION

(11) **EP 1 240 247 B1**
(45) Date of publication and mention of the grant of the patent: **29.10.2003**
(21) Application number: 99949111.1
(22) Date of filing: 16.09.1999
(51) Int. Cl.: C08L 25/02, C08K 5/521

(54) **FIRE-RETARDING THERMOPLASTIC COMPOSITION OF VINYLACROMATIC POLYMER**
FLAMMGESCHÜTZTE THERMOPLASTISCHE ZUSAMMENSETZUNG AUS VINYLAROMATISCHEM POLYMER
COMPOSITION THERMOPLASTIQUE IGNIFUGEANTE A BASE DE POLYMERE VINYL-AROMATIQUE

(30) Priority: 29.09.1998 FR 9812406
(43) Date of publication of application: 18.09.2002
(73) Proprietor: A. SCHULMAN GMBH, 50170 Kerpen (DE)
(72) Inventor: COURONNE, Claire, F-59000 Lille (FR); DEXARCIS, Frantz, Michel, F-13500 Martigues (FR); BOIDEAU, Jean-François, F-62490 Quiery-la-Motte (FR)
(74) Representative: Sternagel, Fleischer, Godemeyer & Partner Patentanwälte
(86) International application number: GB9903079
(87) International publication number: WO00018837

(56) References cited:
- EP-A- 0 438 939
- WO-A-95/16736

## Description

The present invention relates to a fire-retarding thermoplastic composition of a vinylaromatic polymer, to a process as well as masterbatches for preparing the composition, and to a process for improving the fire-retarding properties of a vinylaromatic polymer.

(Co)polymers of vinylaromatic hydrocarbons, especially styrene (co)polymers and the compositions containing them, such as high-impact polystyrene (HIPS), comprising a polystyrene modified by a rubber intended to improve the mechanical properties, or a composition of the acrylonitrile/butadiene/styrene (ABS) type, are widely used and have become commonplace thermoplastics in a very wide range of different applications, especially because of their excellent mechanical properties and their easy processing. However, they have the drawback of being readily inflammable, which limits their use in some applications.

It is known to add fire retardants to these polymers. The most commonly used consist of halogen compounds, especially chlorine or bromine compounds, such as hexabromobenzene or hexabromocyclododecane. Although these compounds are recognised as very effective fire retardants, they have the drawback, however, of producing toxic and corrosive combustion products when they are exposed to fire.

Considerable effort has been expended in recent years to develop halogen-free fire retardants for vinylaromatic hydrocarbon polymers, especially styrene polymers.

Thus, various fire retardants have been used in styrene polymers, such as melamine cyanurate, melamine, phosphorus compounds, particularly red phosphorus, polyphosphates such as ammonium polyphosphate, melamine phosphate, organic esters of phosphoric acid, such as triphenylphosphate, various inorganic compounds, such as magnesium hydroxide, and thermoplastic rubbers such as thermoplastic elastomer block copolymers compatible with styrene polymers, such as is described for example in European Patent Applications EP No. 0,438,939 and EP No. 0,734,412

It has been noticed that these halogen-free fire retardants have certain drawbacks when they are combined with vinylaromatic hydrocarbon polymers, especially styrene polymers. They may have deleterious effects on the physical and mechanical properties of the polymers, especially in terms of impact strength or of gloss, or on the conditions for processing or converting the polymers into finished articles, in such a way that the rate of production of the finished articles can be significantly reduced.

There therefore seems to be a need to provide halogen-free fire retardants for vinylaromatic hydrocarbon polymers, especially styrene polymers which do not have these undesirable effects, on the physical and mechanical properties of the polymers, and especially on the processing or conversion of the polymers into finished articles.

A thermoplastic composition based on a vinylaromatic hydrocarbon polymer, especially a styrene polymer, has been discovered which simultaneously improves the fire-retarding properties and the properties relating to processing or converting it into finished articles, without significantly reducing the physical and mechanical properties of the polymer.

The present invention relates to a thermoplastic composition of a vinylaromatic hydrocarbon polymer, especially a styrene polymer, having a polymeric component and a fire-retarding component, characterised in that the composition comprises, for a total of 100 parts by weight:
(a) from 75 to 96 parts by weight of the polymeric component comprising at least one (co)polymer (A) of a vinylaromatic hydrocarbon, especially styrene, having a weight-average molecular mass ranging from 150,000 to 400,000, and
(b) the fire-retarding component comprising:
   (1) from 2 to 10 parts by weight of at least one non-halogenated ester of orthophosphoric acid, and
   (2) from 2 to 15 parts by weight of at least one (co)polymer (B) of a vinylaromatic hydrocarbon, especially styrene, identical or different in nature to the (co)polymer (A), but having a weight-average molecular mass ranging from 2000 to 15,000.

The polymeric component comprises at least one (co)polymer (A) of a vinylaromatic hydrocarbon such as a styrene monomer, i.e. a vinyl monomer substituted by an aromatic radical. In particular it is a styrene (co)polymer having, as monomer repeat unit, an aromatic hydrocarbon with an ethylenic side chain, particularly one satisfying the general formula CₙH₂ₙ₋₈, where n is a number ranging from 8 to 12, preferably from 8 to 10. The monomer repeat unit is preferably styrene or an alpha-substituted styrene, especially one substituted by an alkyl radical, for example a C₁ to C₄ alkyl radical, preferably a methyl radical, for example alpha-methylstyrene, or else a styrene substituted on the aromatic ring, especially by an alkyl radical, for example a C₁ to C₄ alkyl radical, preferably a methyl radical, for example paramethylstyrene. It may equally well be a homopolymer, such as a homopolystyrene, for example a so-called "crystal" polystyrene, or a copolymer of at least two vinylaromatic hydrocarbons, especially of at least two different styrene monomers, such as those mentioned above. When the (co)polymer (A) is a copolymer, the proportion of vinylaromatic monomer, especially styrene monomer, may be at least 50%, preferably at least 70% or 80%, by weight in the copolymer.

(Co)polymer (A) of the polymeric component is a (co)polymer of high molecular weight such that the weight-average molecular mass ranges from 150,000 to 400,000, preferably from 190,000 to 350,000. It may also have a number-average molecular mass ranging from 50,000 to 150,000, preferably from 60,000 to 120,000. The ratio of the weight-average molecular mass to the number-average molecular mass may range from 2 to 5, preferably from 2.5 to 4.5. When the (co)polymer (A) is in particular a styrene homopolymer or copolymer, it may have a melt flow index or MFI (measured according to the standardised "ISO 1133" method) ranging from 0.5 to 30 g/10 minutes, preferably from 1 to 20 g/10 minutes. It may also have a heat resistance characterised by a Vicat temperature (measured according to the standardised "ISO 306, method B" method) ranging from 80 to 105°C, preferably from 85 to 102°C.

The polymeric component may preferably comprise, as (co)polymer (A), a high-impact polystyrene or HIPS. The term "high-impact polystyrene" should be understood to mean a styrene (co)polymer, such as the one mentioned above, for example a styrene homopolymer or copolymer, modified by a rubber, for example grafted partly on an elastomeric polymer, especially a homopolymer of a 1,3-conjugated diene, such as a polybutadiene or a polyisoprene. The proportion of elastomeric polymer, especially of polybutadiene or polyisoprene, in a high-impact polystyrene may range from 2 to 20%, preferably from 5 to 15%, by weight. The high-impact polystyrene may also have a weight-average molecular mass ranging from 150,000 to 300,000, preferably from 180,000 to 250,000. The high-impact polystyrene may also have a melt flow index or MFI, (measured according to the standardised "ISO 1133" method) ranging from 1 to 25 g/10 minutes, preferably from 1.5 to 20 g/10 minutes. It may also have an impact strength, also called Izod impact strength (measured according to the standardised "ISO 180-1A" method) ranging from 4 to 16 kJ/m², preferably from 8 to 14 kJ/m². It may also have a heat resistance characterised by a Vicat temperature (measured according to the standardised "ISO 306, method B" method) ranging from 80 to 100°C, preferably from 85 to 98°C.

The polymeric component may also preferably comprise, as (co)polymer (A), a blend of a high-impact polystyrene, such as the one mentioned above, with one or more styrene (co)polymers, such as those mentioned above. The blend may comprise from 30 to 90% by weight of a high-impact polystyrene and from 10 to 70% by weight of a styrene (co)polymer.

The polymeric component may be substantially free of any oxygen atoms, in particular free of any polymer containing oxygen atoms, such as a polycarbonate and/or a polyether.

The polymeric component may therefore represent from 75 to 96, preferably from 80 to 92, particularly from 83 to 90, parts by weight and the fire-retarding component from 25 to 4, preferably from 20 to 8, particularly from 17 to 10, parts by weight, respectively, per 100 parts by weight of the composition according to the present invention.

The fire-retarding component itself comprises, per 100 parts by weight of the composition according to the present invention:
(1) from 2 to 10, preferably from 4 to 8, particularly from 5 to 7, parts by weight of at least one non-halogenated ester of orthophosphoric acid, and
(2) from 2 to 15, preferably from 4 to 12, particularly from 5 to 10, parts by weight of at least one (co)polymer (B) of a vinylaromatic hydrocarbon, especially a styrene (co)polymer, identical or different in nature to the (co)polymer (A) of the polymeric component, but having a weight-average molecular mass ranging from 2000 to 15,000.

Preferably, the fire-retarding component is substantially free of any halogen atoms, especially fluorine, chlorine or bromine atoms.

The non-halogenated ester of orthophosphoric acid may preferably be chosen from neutral non-halogenated esters of orthophosphoric acid, and may especially satisfy the general formula: 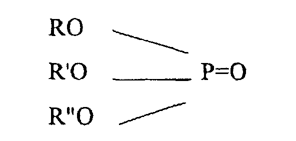 in which formula R, R' and R", which are identical or different, represent alkyl radicals, particularly linear or branched alkyl radicals, especially comprising from 1 to 12, preferably from 2 to 10, carbon atoms, for example ethyl, propyl, isopropyl, butyl, isobutyl, hexyl, 2-ethylhexyl, decyl or isodecyl radicals, or optionally substituted aryl radicals, comprising especially from 6 to 12, preferably from 6 to 10, carbon atoms, for example phenyl, cresyl, xylyl or para-, ortho- or meta-isopropyl phenyl radicals or aralkyl radicals comprising especially from 7 to 14, preferably from 7 to 11, carbon atoms, for example the benzyl radical.

In particular, it is possible to use, as non-halogenated ester of orthophosphoric acid, triethyl phosphate, tripropyl phosphate, triisopropyl phosphate, tributyl phosphate, triisobutyl phosphate, trihexyl phosphate, tri(2-ethylhexyl) phosphate, triphenyl phosphate, tricresyl phosphate, cresyl diphenyl phosphates 2-ethylhexyl diphenyl phosphate, trixylyl phosphate, isodecyl diphenyl phosphate or paraisopropylphenyl diphenyl phosphate. It is preferred to use triphenyl phosphate.

The fire-retarding component also comprises at least one (co)polymer (B) of a vinylaromatic hydrocarbon, especially a styrene (co)polymer, the monomer repeat units of which may be identical or different to those of the (co)polymer (A) of the polymeric component, but which is characterised by a low weight-average molecular mass M_{w}, in particular ranging from 2000 to 15,000, preferably from 5000 to 12,000. When the weight-average molecular mass M_{w}, of the (co)polymer (B) is particularly too low, the fire-retarding properties and the processing properties of the composition are degraded simultaneously.

In the composition according to the present invention, the (co)polymers (A) and (B) may in particular be chosen in such a way that the ratio of the weight-average molecular mass of the (co)polymer (A) to that of the (co)polymer (B) ranges from 12 to 50, preferably from 15 to 40, particularly from 18 to 35.

The (co)polymer (B) may also have a number-average molecular mass Mₙ, ranging from 700 to 5000, preferably from 1400 to 4000. It may also have a broad molecular-mass distribution, given by the M_{w}/Mₙ ratio, ranging from 2 to 5, preferably from 2.5 to 4.

The (co)polymer (B) may be identical or different in nature to the (co)polymer (A) of the polymeric component. Preferably, the (co)polymer (B) is a styrene (co)polymer, as defined above for the (co)polymer (A). In particular, it may have, as monomer repeat unit, an aromatic hydrocarbon with an ethylenic side chain, particularly one satisfying the general formula CₙH₂ₙ₋₈, where n is a number ranging from 8 to 12, preferably 8 to 10. In particular, the monomer repeat unit may be styrene or an alpha-substituted styrene, especially one substituted by an alkyl radical, for example a C₁ to C₄ alkyl radical, preferably a methyl radical, such as alpha-methylstyrene for example, or else a styrene substituted on the aromatic ring by an alkyl radical, for example a C₁ to C₄ alkyl radical, preferably a methyl radical, such as paramethylstyrene for example. The (co)polymer (B) may have a monomer repeat unit of the styrene type in an amount at least equal to 50%, preferably at least equal to 70% or 80% when it is a copolymer. The (co)polymer (B) is preferably a homopolystyrene and more particularly a homopolymer or copolymer of alpha-methylstyrene, in which the alpha-methylstyrene monomer repeat unit is in a proportion ranging from 50 to 100%, preferably from 70 to 100% or 80 to 100%, by weight.

The (co)polymer (B) may also be characterised by a softening point (measured according to the "ring and ball" method, also called the "103 A" method according to British Standard 2782) ranging from 110 to 180°C, preferably from 130 to 165, especially from 10 to 165°C.

By way of illustration, it is possible to use in particular as (co)polymer (B) in the fire-retarding component, hydrocarbon resins essentially consisting of (co)polymers of alpha-methylstyrene, these being sold by Hercules under the brand names ENDEX 155®, ENDEX 160®, HERCOLITE 290®, KRISTALEX 3115® or KRISTALEX 5140®.

Surprisingly, it has been found that the presence of the low-molecular-weight (co)polymer (B) in the fire-retarding component containing the non-halogenated ester of orthophosphoric acid very significantly improves the fire-retarding properties of the thermoplastic composition based on the (co)polymer (A), whereas the low-molecular-weight (co)polymer (B) is not known itself to have, intrinsically, any fire-retarding property with regard to (co)polymers (A).

In particular, the composition according to the present invention allows good fire resistance to be achieved, this being characterised especially by the requirements stipulated by Class "V2" of the standardised "UL 94 vertical" test without resorting to halogenated fire retardants or to combinations of the non-halogenated ester of orthophosphoric acid with fire retardants known as such. It has been found that the low-molecular-weight (co)polymer (B) improves the fire-retarding behaviour provided by the non-halogenated ester of orthophosphoric acid via a synergy effect.

Moreover, it has also been found that the properties relating to processing or converting the composition into finished articles are markedly improved thanks to the presence of the (co)polymer (B) in the fire-retarding component, whereas the presence only of the non-halogenated ester of orthophosphoric acid in appreciable quantity has the secondary effect of degrading these properties to a certain extent. Thus, thanks to the fire-retarding component according to the present invention, it has surprisingly been found that the melt flow index (MFI) of the composition (measured according to the standardised "ISO 1133" method) may be significantly increased, without the Vicat temperature (measured according to the standardised "ISO 306, method B" method) characterising the heat resistance of the composition being significantly lowered. This means that, thanks to this fire-retarding component, the rate of conversion of the composition into finished articles may be increased, especially because of the better melt flow of the composition and because of a cooling time for the finished article which is not in particular extended, but on the contrary remains more or less unchanged.

Other additives or fillers may be used in the composition of the present invention, particularly pigments, colorants, stabilisers, antioxidants, UV stabilisers, antistatic agents or mould-release agents. Preferably, they are substantially free of halogen atoms, especially fluorine, chlorine or bromine atoms.

Preparation of the composition according to the invention may be carried out in various ways. In particular, it may be carried out according to a process which comprises adding the non-halogenated ester of orthophosphoric acid and the (co)polymer (B) to the (co)polymer (A) which is either in the solid state, or in the melt state, such as in an extruder for example.

Thus, one of the processes for preparing it may comprise a step in which the non-halogenated ester of orthophosphoric acid and the (co)polymer (B) are added, for example simultaneously or in succession in one order or the other, to the (co)polymer (A) in the solid state and are blended with the latter in the solid state, and then preferably in the melt state. The (co)polymer (A) in the solid state may be in the form of a powder or of granules. The solid-state blending may be carried out at a temperature ranging from room temperature to a temperature below the glass transition temperature of the (co)polymer (A), for example from 0 to 40°C, for a time which can range from 1 to 120 minutes, preferably from 5 to 60 minutes. The solid-state blending may be carried out in a mixer or blender, especially one designed for dry mixing or blending the solid constituents of a blend, for example in a preblender of an extruder. The preparation of the blend may advantageously be followed by hot blending or mixing, especially at a temperature equal to or greater than the glass transition temperature of the (co)polymer (A), for example at a temperature ranging from 190 to 250°C, especially in an extruder, a granulator, a mixer, for example of the "Buss" type or an injection moulding machine, for example an extruder or a twin-screw granulator.

According to another process, the preparation of the composition may be carried out by simultaneously or successively adding the non-halogenated ester of orthophosphoric acid and the (co)polymer (B) to the (co)polymer (A) in the melt state, particularly at a temperature equal to or greater than the glass transition temperature of the (co)polymer (A), for example at a temperature ranging from 190 to 250°C. The addition may be made directly in an extruder, a granulator or a mixer, for example of the "Buss" type intended to convert the (co)polymer (A) either into finished articles or into granules. The addition may especially be made in the melting or plasticizing zone of an extruder, of a granulator or of a mixer, in which the (co)polymer(A) is partly in the solid state and partly in the melt state, or else in the metering or transporting zone of an extruder, of a granulator or of a mixer in which the (co)polymer (A) is completely in the melt state. The addition may also be made at the end of the process for preparing the (co)polymer (A), especially at the end of a mass polymerisation or solution polymerisation process, for example after the polymerisation and devolatilization steps in which the (co)polymer (A) is still in the melt state, and before the granulation step in which the (co)polymer (A) in the melt state passes into the die of a granulator.

The composition according to the invention may thus be obtained in the form of granules and/or directly converted into finished or semi-finished articles by injection moulding or extrusion.

In all cases, the non-halogenated ester of orthophosphoric acid may be used in the pure state, for example in the form of a solid or a liquid. When it is especially in solid form, it may be used in the form of a concentrated composition, also called a masterbatch, in the (co)polymer (A) and/or the (co)polymer (B). In particular, it is possible to use a masterbatch prepared beforehand and essentially consisting of the two constituents of the fire-retarding component, i.e. the ester and the (co)polymer (B), in particular in the desired proportions mentioned above. The masterbatch is then added to the (co)polymer (A), to form the composition according to the invention. In the latter case, 100 parts by weight of the masterbatch may comprise (1) from 10 to 85, preferably from 25 to 65 and more particularly from 30 to 60 parts by weight of the non-halogenated ester of orthophosphoric acid and (2) from 90 to 15, preferably from 75 to 35 and more particularly from 70 to 40 parts by weight of the (co)polymer (B).

It is also possible to use a masterbatch, or a concentrated composition, of the non-halogenated ester of orthophosphoric acid and the (co)polymer (B) in the (co)polymer (A), comprising from 50 to 1000 and preferably from 100 to 500 parts by weight of each of the two constituents of the fire-retarding component per 100 parts by weight of the (co)polymer (A). The proportions of each of the constituents of the concentrated composition are determined depending on the desired degree of non-inflammability and/or the desired melt flow and Vicat temperature. The various masterbatches may be prepared according to one of the methods used for the composition according to the invention itself.

The present invention also relates to a process for improving the fire-retarding properties of a thermoplastic composition of a vinylaromatic hydrocarbon polymer, especially a styrene polymer, having a polymeric component and a fire-retarding component, characterised in that it comprises, in the preparation of 100 parts by weight of the composition, adding the fire-retarding component comprising:
(1) from 2 to 10 parts by weight of at least one non-halogenated ester of orthophosphoric acid, and
(2) from 2 to 15 parts by weight of at least one (co)polymer (B) of a vinylaromatic hydrocarbon, especially a styrene (co)polymer, having a weight-average molecular mass ranging from 2000 to 15,000,
to 75 to 96 parts by weight of the polymeric component comprising at least one vinylaromatic hydrocarbon, especially styrene, (co)polymer (A), identical or different in nature to the (co)polymer (B), but having a weight-average molecular mass ranging from 150,000 to 400,000.

The preferred characteristics of the (co)polymers (A) and (B) and of the non-halogenated ester of orthophosphoric acid as well as the preferred conditions for preparing the composition, are identical to those mentioned above.

The composition according to the present invention finds applications in various fields in which it is converted into finished articles or industrial articles that are especially intended for the motor-vehicle, domestic-electrical-appliance and audiovisual- or computing-equipment industries, such as television receivers and computer screens.

The articles thus obtained, while still having their mechanical properties maintained at a high level, exhibit improved fire retardant behaviour compared with previously manufactured articles. Moreover, the rate at which these articles are produced is increased by the presence of the fire-retarding component of the present invention.

The weight-average and number-average molecular masses of the (co)polymers (A) and (B) are measured by gel permeation chromatography.

The following non-limiting examples illustrate the present invention.

In the examples, various (co)polymers (A) were used:
- a high-impact polystyrene (HIPS) comprising a homopolystyrene (91% by weight) modified by a polybutadiene (9% by weight), having a weight-average molecular mass of 210,000, a number-average molecular mass of 85,000, a melt flow index MFI (measured according to "ISO 1133") of 2.5 g/10 minutes, an Izod impact strength (measured according to "ISO 180-1A") of 10 kJ/m² and a Vicat temperature (measured according to "ISO 306, method B") of 95°C;
- a blend comprising 60 parts by weight of the above mentioned high-impact polystyrene and 30 parts by weight of a crystal homopolystyrene (PS) having a weight-average molecular mass of 250,000, a number-average molecular mass of 110,000, a melt flow index MFI (measured according to "ISO 1133") of 8 g/10 minutes and a Vicat temperature (measured according to "ISO 306, method B") of 101°C.

In the examples, various low-molecular-weight (co)polymers (B) were used:
- ENDEX 155® from Hercules, essentially consisting of an alpha-methylstyrene copolymer having M_{w} = 8600, Mₙ = 2900 and a softening point (according to the ring-and-ball method) of 152°C;
- ENDEX 160® from Hercules, essentially consisting of an alpha-methylstyrene copolymer having M_{w} = 11150, Mₙ = 3880 and a softening point (according to the ring-and-ball method) of 160°C.
- HERCOLITE 290® from Hercules, essentially consisting of styrene (co-)polymer having M_{w} = 6040, Mₙ = 1670 and a softening point (according to the ring-and-ball method) of 140°C.

In the examples, all the compositions are prepared according to a method which comprises dry blending the (co)polymer (A) in granule form with the non-halogenated ester of orthophosphoric acid and the (co)polymer (B) at room temperature (20°C) for 30 minutes The blend thus obtained is put into a twin-screw extruder known by the trade name ZSK 30® from Werner & Pfleiderer at 230°C. The compositions are thus obtained in the form of granules.

The test used for measuring the fire resistance of the compositions is the UL 94 vertical test. The test bars subjected to this test are obtained by moulding the extruded and then granulated compositions in a Demag machine at a temperature of approximately 210°C and at a pressure of approximately 5 MPa, for a time of approximately 2 minutes. They have dimensions of 127 × 12.7 × 2 mm and are conditioned in a 50% RH atmosphere at 23°C for 48 hours.

### Examples 1 to 6

In Examples 1 to 6, the following are used:
- as (co)polymer (A), the above mentioned blend of high-impact polystyrene (HIPS) and crystal homopolystyrene (PS),
- as non-halogenated ester of orthophosphoric acid, triphenyl phosphate (TPP), and
- as (co)polymer (B) ENDEX 155®.

Table 1 shows the compositions produced according to Examples 1 to 6 and the results of measurements carried out on these compositions.

**Table 1**

| **Example** | **Parts by weight of the composition** | | | **UL 94** | **MFI (g/10 min.)** | **Vicat temperature (°C)** |
|---|---|---|---|---|---|---|
| | **HIPS/PS blend** | **TPP** | **ENDE X 155** | | | |
| 1 (comparative) | 94.5 | 5.5 | 0 | UC | 10 | 82 |
| 2 (comparative) | 90 | 10 | 0 | V2 | 13 | 75 |
| 3 (comparative) | 90 | 0 | 10 | UC | 11 | 93 |
| 4 | 89 | 6 | 5 | V2 | 14 | 80.5 |
| 5 | 87.5 | 5.5 | 7 | V2 | 18 | 80 |
| 6 | 84.5 | 5.5 | 10 | V2 | 19 | 80 |

In the UL 94 vertical test, "UC" means "unclassified" and "V2" means "passed Class V2".

Example 1 (comparative) shows that a composition containing 5.5 parts by weight of TPP by itself in the fire-retarding component has an insufficient fire resistance. In Example 2 (comparative), TPP is the only constituent of the fire-retarding component, but its concentration has been increased to 10 parts by weight in the composition; it is observed that the fire resistance becomes satisfactory, but the Vicat temperature is then too low so that, during conversion of the composition into finished articles, the rate of conversion is markedly reduced. Example 3 (comparative) shows that when the fire-retarding composition comprises only ENDEX 155®, i.e. the (co)polymer (B), in an amount of 10 parts by weight in the composition, the fire resistance of the composition is very low.

Examples 4 to 6 (according to the invention) show that compositions comprising, in their fire-retarding component, 5.5 or 6 parts by weight of TPP in combination with 5 or 7 or 10 parts by weight of ENDEX 155®, i.e. the (co)polymer (B), achieve a good level of fire resistance and simultaneously improved conditions for processing or converting them into finished articles, as may be shown by the high MFI values obtained and by Vicat temperatures that remain at a largely unchanged value (80°C) despite the increase in MFI.

### Examples 7 to 9

In Examples 7 to 9, the following are used:
- as (co)polymer (A), the above mentioned high-impact polystyrene (HIPS),
- as non-halogenated ester of orthophosphoric acid, triphenyl phosphate (TPP), and
- as (co)polymer (B), ENDEX 155®.

Table 2 shows the compositions produced according to Examples 7 to 9.

**Table 2**

| **Example** | **Parts by weight of the composition** | | |
|---|---|---|---|
| | **HIPS** | **TPP** | **ENDEX 155** |
| 7 | 89 | 6 | 5 |
| 8 | 87.5 | 5.5 | 7 |
| 9 | 84.5 | 5.5 | 10 |

The compositions thus produced in these examples exhibit good fire behaviour and improved properties relating to processing or converting them into finished articles compared with compositions whose fire-retarding component contains only one of the two constituents (TPP or ENDEX 155®).

### Examples 10 to 12

In Examples 10, 11 and 12, identical compositions to those of Examples 7, 8 and 9 are produced, except that ENDEX 155® was replaced with ENDEX 160®.
The compositions thus produced in these examples exhibit good fire behaviour and have improved properties relating to processing or converting them into finished articles compared with compositions whose fire-retarding component contains only one of the two constituents (TPP or ENDEX 160®).

### Examples 13 to 15

In Examples 13, 14 and 15, the following are used:
- as (co)polymer (A), the above mentioned blend of high-impact polystyrene (HIPS) and crystal homopolystyrene (PS),
- as non-halogenated ester of orthophosphoric acid, triphenyl phosphate (TPP), and
- as (co)polymer (B), HERCOLITE 290®.

Table 3 shows the compositions produced according to Examples 13 to 15 and the results of measurements carried out on these compositions.

**Table 3**

| **Example** | **Parts by weight of the composition** | | | **UL 94** | **MFI (g/10 min.)** | **Vicat (°C)** |
|---|---|---|---|---|---|---|
| | **HIPS/PS blend** | **TPP** | **HERCOLIT E 290** | | | |
| 13 | 89 | 6 | 5 | UC | 15 | 80 |
| 14 | 87 | 6 | 7 | V2 | 18.5 | 80 |
| 15 | 84 | 6 | 10 | V2 | 20 | 79.5 |

In the UL 94 vertical test, "UC" means "unclassified" and "V2" means "passed Class V2".

The compositions thus produced in these examples exhibit good fire behaviour and improved properties relating to processing or converting them into finished articles compared with compositions whose fire-retarding component contains only one of the two constituents (TPP or HERCOLITE 290®).

## Claims

1. Thermoplastic composition of a vinylaromatic hydrocarbon polymer, having a polymeric component and a fire-retarding component, **characterised in that** the composition comprises, for a total of 100 parts by weight:
(a) from 75 to 96 parts by weight of the polymeric component comprising at least one (co)polymer (A) of a vinylaromatic hydrocarbon having a weight-average molecular mass ranging from 150,000 to 400,000, and
(b) the fire-retarding component comprising:
(1) from 2 to 10 parts by weight of at least one non-halogenated ester of orthophosphoric acid, and
(2) from 2 to 15 parts by weight of at least one (co)polymer (B) of a vinylaromatic hydrocarbon, identical or different in nature to the (co)polymer (A), but having a weight-average molecular mass ranging from 2000 to 15,000.

2. Composition according to Claim 1, **characterised in that** the (co)polymer (A) is a (co)polymer having, as monomer repeat unit, an aromatic hydrocarbon with an ethylenic side chain satisfying the general formula CₙH₂ₙ₋₈, where n is a number ranging from 8 to 12.

3. Composition according to Claim 2, **characterised in that** the (co)polymer (A) is a styrene (co)polymer.

4. Composition according to Claim 1, **characterised in that** the (co)polymer (A) is a rubber-modified styrene homopolymer or copolymer.

5. Composition according to Claim 1, **characterised in that** the (co)polymer (A) is a blend of the copolymers (A) according to Claims 2 or 3 and 4.

6. Composition according to any one of Claims 1 to 5, **characterised in that** the (co)polymer (B) is a styrene (co)polymer having, as monomer repeat unit, an aromatic hydrocarbon with an ethylenic side chain satisfying the general formula CₙH₂ₙ₋₈, where n is a number ranging from 8 to 12.

7. Composition according to Claim 6, **characterised in that** the (co)polymer (B) is a styrene or alpha-methylstyrene (co)polymer.

8. Composition according to any one of Claims 1 to 7, **characterised in that** the non-halogenated ester of orthophosphoric acid satisfies the general formula 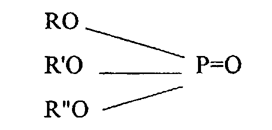 in which R, R' and R", which are identical or different, represent alkyl, aryl or aralkyl radicals.

9. Composition according to Claim 8, **characterised in that** the non-halogenated ester of orthophosphoric acid is triphenyl phosphate.

10. Process for preparing the composition according to any one of Claims 1 to 9, **characterised in that** the non-halogenated ester of orthophosphoric acid and the (co)polymer (B) are added to the (co)polymer (A) in the solid state and blended with the latter in the solid state, and then preferably in the melt state, or else they are added to the (co)polymer (A) in the melt state.

11. Process for improving the fire-retarding properties of a thermoplastic composition of a vinylaromatic hydrocarbon polymer, having a polymeric component and a fire-retarding component, **characterised in that** it comprises, in the preparation of 100 parts by weight of the composition, adding the fire-retarding component comprising:
(1) from 2 to 10 parts by weight of at least one non-halogenated ester of orthophosphoric acid, and
(2) from 2 to 15 parts by weight of at least one (co)polymer (B) of a vinylaromatic hydrocarbon, having a weight-average molecular mass ranging from 2000 to 15,000,
to 75 to 96 parts by weight of the polymeric component comprising at least one vinylaromatic hydrocarbon (co)polymer (A), identical or different in nature to the (co)polymer (B), but having a weight-average molecular mass ranging from 150,000 to 400,000.

12. Masterbatch essentially consisting of the two constituents of the fire-retarding component according to any one of Claims 1, 5, 6, 7, 8 or 9.

13. Masterbatch comprising 100 parts by weight of the (co)polymer (A) and 50 to 1000 parts by weight of each of the two constituents of the fire-retarding component according to any one of Claims 1 to 9.

## Patentansprüche

1. Thermoplastische Zusammensetzung eines vinylaromatischen Kohlenwasserstoff-Polymers mit einer polymeren Komponente und einer flammhemmenden Komponente, **dadurch gekennzeichnet, dass** die Zusammensetzung bei insgesamt 100 Gewichtsteilen enthält:
(a) 75 bis 96 Gewichtsteile der polymeren Komponente, umfassend mindestens ein (Co)polymer (A) eines vinylaromatischen Kohlenwasserstoffs mit einer von 150.000 bis 400.000 reichenden Gewichts-mittleren Molekularmasse, und
(b) die flammhemmende Komponente, umfassend:
(1) 2 bis 10 Gewichtsteile mindestens eines nicht-halogenierten Esters der Orthophosphorsäure, und
(2) 2 bis 15 Gewichtsteile mindestens eines (Co)polymers (B) eines vinylaromatischen Kohlenwasserstoffs, welches der Natur nach zu dem (Co)polymer (A) identisch oder davon verschieden ist, aber eine von 2.000 bis 15.000 reichende Gewichts-mittlere Molekularmasse aufweist.

2. Zusammensetzung gemäß Anspruch 1, **dadurch gekennzeichnet, dass** das (Co)polymer (A) ein (Co)polymer darstellt, welche als Monomer-Wiederholungseinheit einen aromatischen Kohlenwasserstoff mit einer ethylenischen Seitenkette aufweist, welche die allgemeine Formel CₙH₂ₙ₋₈ erfüllt, wobei n eine von 8 bis 12 reichende Zahl ist.

3. Zusammensetzung gemäß Anspruch 2, **dadurch gekennzeichnet, dass** das (Co)polymer (A) ein Styrol(co)polymer ist.

4. Zusammensetzung gemäß Anspruch 1, **dadurch gekennzeichnet, dass** das (Co)polymer (A) ein Kautschuk-modifiziertes Styrolhomopolymer oder -Copolymer ist.

5. Zusammensetzung gemäß Anspruch 1, **dadurch gekennzeichnet, dass** das (Co)polymer (A) eine Mischung der Copolymere (A) gemäß der Ansprüche 2 oder 3 und 4 ist.

6. Zusammensetzung gemäß einem der Ansprüche 1 bis 5, **dadurch gekennzeichnet, dass** das (Co)polymer (B) ein Styrol(co)polymer darstellt, welches als Monomer-Wiederholungseinheit einen aromatischen Kohlenwasserstoff mit einer ethylenischen Seitenkette aufweist, welche die allgemeine Formel CₙH₂ₙ₋₈ erfüllt, wobei n eine von 8 bis 12 reichende Zahl ist.

7. Zusammensetzung gemäß Anspruch 6, **dadurch gekennzeichnet, dass** das (Co)polymer (B) ein Styrol- oder alpha-Methylstyrol(co)polymer ist.

8. Zusammensetzung gemäß einem der Ansprüche 1 bis 7, **dadurch gekennzeichnet, dass** der nicht-halogenierte Ester der Orthophosphorsäure die allgemeine Formel 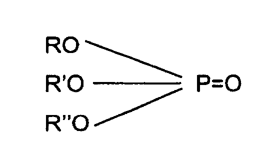 erfüllt, in der R, R' und R", welche identisch oder verschieden sind, Alkyl-, Aryl- oder Aralkyl-Radikale darstellen.

9. Zusammensetzung gemäß Anspruch 8, **dadurch gekennzeichnet, dass** der nicht-halogenierte Ester der Orthophosphorsäure Triphenylphosphat ist.

10. Verfahren zur Herstellung der Zusammensetzung gemäß einem der Ansprüche 1 bis 9, **dadurch gekennzeichnet, dass** der nicht-halogenierte Ester der Orthophosphorsäure und das (Co)polymer (B) zu dem (Co)polymer (A) in festem Zustand zugegeben werden, und mit Letzterem in festem Zustand vermischt werden, und dann vorzugsweise in geschmolzenem Zustand vermischt werden, oder in anderer Weise werden sie zu dem (Co)polymer (A) in geschmolzenem Zustand zugegeben.

11. Verfahren zur Verbesserung der flammgeschützten Eigenschaften einer thermoplastischen Zusammensetzung eines vinylaromatischen Kohlenwasserstoff-Polymers, welches eine polymere Komponente und eine flammhemmende Komponente aufweist, **dadurch gekennzeichnet, dass** es bei der Herstellung von 100 Gewichtsteilen der Zusammensetzung, die folgende Zugabe der flammhemmenden Komponente, umfasst:
(1) 2 bis 10 Gewichtsteile mindestens eines nicht-halogenierten Esters der Orthophosphorsäure, und
(2) 2 bis 15 Gewichtsteile mindestens eines (Co)polymers (B) eines vinylaromatischen Kohlenwasserstoffs mit einer von 2.000 bis 15.000 reichenden Gewichts-mittleren Molekularmasse,
zu 75 bis 96 Gewichtsteilen der polymeren Komponente, welche mindestens ein vinylaromatisches Kohlenwasserstoff-(Co)polymer (A), welches der Natur nach zu dem (Co)polymer (B) identisch oder davon verschieden ist, aber eine von 150.000 bis 400.000 reichende Gewichts-mittlere Molekularmasse aufweist, umfasst.

12. Masterbatch, welcher im Wesentlichen aus den zwei Bestandteilen der flammhemmenden Komponente gemäß einem der Ansprüche 1, 5, 6, 7, 8 oder 9 besteht.

13. Masterbatch, umfassend 100 Gewichtsteile des (Co)polymers (A) und 50 bis 1000 Gewichtsteile von jedem der beiden Bestandteile der flammhemmenden Komponente gemäß einem der Ansprüche 1 bis 9.

## Revendications

1. Composition thermoplastique d'un polymère hydrocarbure vinyl-aromatique, comportant un composé polymère et un composé ignifuge, **caractérisée en ce que** la composition comprend, pour un total de 100 parties en poids :
(a) de 75 à 96 parties en poids du composé polymère comprenant au moins un (co)polymère (A) d'un hydrocarbure vinyl-aromatique ayant une masse moléculaire en poids moyen allant de 150 000 à 400 000, et
(b) le composé ignifuge comprenant :
(1) de 2 à 10 parties en poids d'au moins un ester non halogéné d'acide orthophosphorique, et
(2) de 2 à 15 parties en poids d'au moins un (co)polymère (B) d'un hydrocarbure vinyl-aromatique, identique ou différent en nature du (co)polymère (A), mais ayant une masse moléculaire en poids moyen allant de 2 000 à 15 000.

2. Composition selon la revendication 1, **caractérisée en ce que** le (co)polymère (A) est un (co)polymère ayant, comme unité répétitive monomère, un hydrocarbure aromatique avec une chaîne latérale éthylénique satisfaisant la formule générale CₙH₂ₙ₋₈ où n est un nombre allant de 8 à 12.

3. Composition selon la revendication 2, **caractérisée en ce que** le (co)polymère (A) est un (co)polymère styrène.

4. Composition selon la revendication 1, **caractérisée en ce que** le (co)polymère (A) est un homopolymère ou un (co)polymère styrène caoutchouc-modifié.

5. Composition selon la revendication 1, **caractérisée en ce que** le (co)polymère (A) est un mélange des copolymères (A) selon les revendications 2 ou 3 et 4.

6. Composition selon l'une quelconque des revendications 1 à 5, **caractérisée en ce que** le (co)polymère (B) est un (co)polymère styrène ayant, comme unité répétitive monomère, un hydrocarbure aromatique avec une chaîne latérale éthylénique satisfaisant la formule générale CₙH₂ₙ₋₈ où n est un nombre allant de 8 à 12.

7. Composition selon la revendication 6, **caractérisée en ce que** le (co)polymère (B) est un (co)polymère styrène ou alpha-méthylstyrène.

8. Composition selon l'une quelconque des revendications 1 à 7, **caractérisée en ce que** l'ester non halogéné de l'acide orthophosphorique satisfait la formule générale 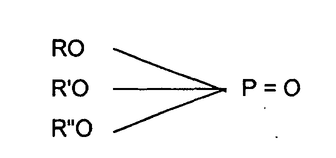 dans laquelle R, R', R", qui sont différents ou identiques, représentent des radicaux alkyles, aryles ou aralkyles.

9. Composition selon la revendication 8, **caractérisée en ce que** l'ester non halogéné de l'acide orthophosphorique est le triphénylphosphate.

10. Procédé pour la préparation de la composition selon l'une quelconque des revendications 1 à 9, **caractérisé en ce que** l'ester non halogéné de l'acide orthophosphorique et le (co)polymère (B) sont ajoutés au (co)polymère (A) à l'état solide et mélangés avec ce dernier à l'état solide, et ensuite de préférence à l'état fondu, ou sinon ils sont ajoutés au (co)polymère (A) à l'état fondu.

11. Procédé pour améliorer des propriétés ignifuges d'une composition thermoplastique d'un polymère hydrocarbure vinyl-aromatique ayant un composé polymère et un composé ignifuge, **caractérisé en ce qu'**il comprend, dans la préparation de 100 parties en poids de la composition, l'ajout du composé ignifuge comprenant :
(1) de 2 à 10 parties en poids d'au moins un ester non halogéné d'acide orthophosphorique, et
(2) de 2 à 15 parties en poids d'au moins un (co)polymère (B) d'un hydrocarbure vinyl-aromatique présentant une masse moléculaire en poids moyen allant de 2 000 à 15 000,
à 75 à 96 parties en poids du composé polymère comprenant au moins un (co)polymère (A) hydrocarbure vinyl-aromatique, identique ou différent en nature du (co)polymère (B), mais ayant une masse moléculaire en poids moyen allant de 150 000 à 400 000.

12. Mélange maître qui est essentiellement constitué des deux éléments constitutifs du composé ignifuge selon l'une quelconque des revendications 1, 5, 6, 7, 8 ou 9.

13. Mélange maître comprenant 100 parties en poids du (co)polymère (A) et 50 à 1 000 parties en poids de chacun des deux éléments constitutifs du composé ignifuge selon l'une quelconque des revendications 1 à 9.
